(19) Europäisches Patentamt
European Patent Office
Office européen des brevets

(11) **EP 3 273 209 B1**

(12) **EUROPÄISCHE PATENTSCHRIFT**

(45) Veröffentlichungstag und Bekanntmachung des Hinweises auf die Patenterteilung:
**15.12.2021 Patentblatt 2021/50**

(51) Int Cl.:
*G01F 25/00* *(2006.01)*    *G01F 1/00* *(2006.01)*

(21) Anmeldenummer: **17178951.4**

(22) Anmeldetag: **30.06.2017**

(54) **VERFAHREN ZUM BETREIBEN EINES DURCHFLUSSMESSGERÄTS UND DURCHFLUSSMESSGERÄT**

METHOD FOR OPERATING A FLOW METER AND FLOW METER

PROCÉDÉ DE FONCTIONNEMENT D'UN DÉBITMÈTRE ET DÉBITMÈTRE

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: **18.07.2016 DE 102016113200**

(43) Veröffentlichungstag der Anmeldung:
**24.01.2018 Patentblatt 2018/04**

(73) Patentinhaber: **Krohne AG**
**4019 Basel (CH)**

(72) Erfinder: **WANG, Tao**
**Rough Common, Canterburry CT2 9DG (GB)**

(74) Vertreter: **Gesthuysen Patentanwälte**
**Patentanwälte**
**Huyssenallee 100**
**45128 Essen (DE)**

(56) Entgegenhaltungen:
DE-A1-102013 100 702    US-A1- 2014 137 642

• R. B. Abernethy ET AL: "ASME Measurement Uncertainty", Journal of Fluids Engineering, Bd. 107 1. Juni 1985 (1985-06-01), Seiten 161-164, XP055434703, Gefunden im Internet: URL:https://fluidsengineering.asmedigitalc ollection.asme.org/data/journals/jfega4/27 011/161_1.pdf [gefunden am 2017-12-13]

• R. J. MOFFAT: "Contributions to the Theory of Single-Sample Uncertainty Analysis", JOURNAL OF FLUIDS ENGINEERING, Bd. 104, 1. Januar 1982 (1982-01-01), Seiten 250-258, XP055434721, ISSN: 0098-2202, DOI: 10.1115/1.3241818

• HENRY M: "Recent developments in self-validating (SEVA) sensors", SENSOR REV, IFS PUBLICATIONS, BEDFORD, GB, vol. 21, no. 1, 1 January 2001 (2001-01-01), pages 16-22, XP008080856, ISSN: 0260-2288, DOI: 10.1108/02602280110380548

• WERNER M: "KRAFTSTOFFVERBRAUCHSMESSUNG-GENAUER ALS ES DAS GESETZ ERLAUBT", ATZ, SPRINGER VIEWEG, DE, vol. 99, no. 2, 1 February 1997 (1997-02-01), pages 118-120, 122, XP000680691, ISSN: 0001-2785

• LIU R P ET AL: "A neural network to correct mass flow errors caused by two-phase flow in a digital coriolis mass flowmeter", FLOW MEASUREMENT AND INSTRUMENTATION, BUTTERWORTH-HEINEMANN, OXFORD, GB, vol. 12, no. 1, 1 March 2001 (2001-03-01), pages 53-63, XP002355593, ISSN: 0955-5986, DOI: 10.1016/S0955-5986(00)00045-5

EP 3 273 209 B1

**Beschreibung**

Die Erfindung geht aus von einem Verfahren zum Betreiben eines Durchflussmessgeräts zur Messung des Durchflusses eines strömenden Mediums durch eine Leitung, wobei das Durchflussmessgerät eine Messeinheit zur Bestimmung von Einzelmesswerten des Durchflusses und eine Fehlereinheit zur Bestimmung der Messunsicherheit der Einzelmesswerte aufweist, wobei die Bestimmung der Einzelmesswerte mit einer Messfrequenz erfolgt, wobei zu jedem Einzelmessmesswert von der Fehlereinheit eine aktuelle Messunsicherheit bestimmt wird.

Darüber hinaus geht die Erfindung aus von einem Durchflussmessgerät zur Messung des Durchflusses eines strömenden Mediums durch eine Leitung, mit einer Messeinheit zur Bestimmung von Einzelmesswerten des Durchflusses und mit einer Fehlereinheit zur Bestimmung der Messunsicherheit der Einzelmesswerte, wobei die Bestimmung der Einzelmesswerte mit einer Messfrequenz erfolgt, wobei die Fehlereinheit derart ausgestaltet ist, dass sie zu jedem Einzelmesswert eine aktuelle Messunsicherheit bestimmt.

Jede Messung von physikalischen Messgrößen ist stets mit einer Messungenauigkeit behaftet, welche auf die Unvollkommenheit der Messgeräte und die Unvollkommenheit des Messvorgangs zurückzuführen ist. Die Angabe der Messunsicherheit eines Messwertes ermöglicht es dem Anwender, die Zuverlässigkeit des angezeigten Messwertes und damit die Qualität der Messung zu beurteilen. Darüber hinaus ermöglicht es die Angabe einer Messunsicherheit, verschiedene Messungen desselben Messgeräts miteinander zu vergleichen sowie auch Messungen von unterschiedlichen Messgeräten oder in Bezug auf Referenzwerte und Standards zu vergleichen.

Eine Vorgabe für eine international einheitliche Vorgehensweise zur Bestimmung und zur Angabe der Messunsicherheit ist dem "Guide to the Expression of Uncertainty in Measurement" (JCGM, 2008) zu entnehmen. Gemäß diesem Leitfaden kann die Messunsicherheit von Messwerten auf folgende zwei Arten bestimmt werden:

Zum einen kann die Bestimmung der Messunsicherheit durch statistische Analyse, im Detail durch die Bestimmung der Standardabweichung der Messwerte über einen begrenzten Zeitraum, erfolgen. Mit dieser Methode lässt sich die statistische Streuung von Einzelmesswerten und damit die statistische Messunsicherheit bestimmen. Sämtliche Störgrößen, die den Messwert bzw. die Messunsicherheit beeinflussen, werden dabei automatisch berücksichtigt. Da die Bestimmung einer Messunsicherheit durch statistische Analyse jedoch über einen begrenzten Zeitraum erfolgt, kann keine genauere Aussage über die aktuelle Messunsicherheit eines Einzelmesswertes getroffen werden.

Zum anderen kann die Messunsicherheit auch theoretisch betrachtet werden, wobei eine Gesamtmessunsicherheit dadurch bestimmt wird, dass einzelne Messunsicherheiten von voneinander unabhängigen, verschiedenen Fehlerquellen durch Fehlerfortpflanzung miteinander verknüpft werden.

Ein Verfahren zum Anzeigen eines Messwertes und zur Bestimmung einer Messunsicherheit sowie ein entsprechendes Messgerät sind aus der Druckschrift US 4,864,512 bekannt.

Aus dem Dokument "Recent developments in self-validating (SEVA) sensors" (Sensor Review, Volume 21, Number 1, 2001, pp. 16 - 22) von Manus Henry ist ein Sensorkonzept bekannt, nach dem zu jedem Messwert eine Echtzeitunsicherheit bestimmt wird.

Die vorliegende Erfindung betrifft den Bereich der Durchflussmesstechnik. Aus dem Stand der Technik ist es bekannt, in den Herstellerangaben oder während eines Messvorgangs zusammen mit dem Messwert eine maximale Messunsicherheit anzugeben. Die Zuverlässigkeit von Messwerten ist damit jedoch stets so groß wie die angegebene maximale Messunsicherheit. Darüber hinaus wird auf diese Weise nicht berücksichtigt, dass die Variation äußerer Betriebsparameter den Messwert sowie auch die Messunsicherheit beeinflussen.

Ausgehend von dem zuvor dargelegten Stand der Technik ist es Aufgabe der vorliegenden Erfindung, ein Verfahren zum Betreiben eines Durchflussmessgeräts anzugeben, welches die Qualität der Messung verbessert. Darüber hinaus ist es Aufgabe der Erfindung ein entsprechendes Durchflussmessgerät anzugeben.

Diese Aufgabe wird gemäß einer ersten Lehre der Erfindung durch ein eingangs genanntes Verfahren dadurch gelöst, dass zu jedem Einzelmesswert von der Fehlereinheit eine aktuelle Messunsicherheit bestimmt wird und dass bei Bestimmung der aktuellen Messunsicherheit die Messunsicherheiten von statischen und dynamischen Fehlerquellen durch Fehlerfortpflanzung miteinander verknüpft werden und dass das Durchflussmessgerät wenigstens eine zusätzliche Sensoreinheit zur Erfassung wenigstens eines aktuellen Betriebsparameters aufweist und dass die Sensoreinheit die Messwerte des aktuellen Betriebsparameters zumindest an die Fehlereinheit weiterleitet und dass als dynamische Fehlerquelle die Variation wenigstens eines Betriebsparameters und die Nullpunktstabilität des Durchflussmessgeräts in die Bestimmung der aktuelle Messunsicherheit eingeht, dass als statische Fehlerquelle die Messunsicherheit der Kalibrierung und/oder die Messunsicherheit der Wiederholbarkeit und/oder die Messunsicherheit der Langzeitreproduzierbarkeit und/oder die Messunsicherheit der Linearität des Durchflussmessgeräts in die Bestimmung der aktuellen Messunsicherheit eingeht bzw. eingehen.

Erfindungsgemäß wurde erkannt, dass eine Bestimmung der Messunsicherheit in Echtzeit dadurch erfolgen kann, dass jedem Einzelmesswert eine aktuelle Messunsicherheit zugeordnet wird. Dabei wird die aktuelle Messunsicherheit zu jedem Einzelmesswert neu bestimmt. In vorteilhafter Weise wird damit berücksichtigt, dass auch die Fehlerquellen im Laufe einer Messung variieren, wobei sich die Dynamik der Fehlerquellen ebenfalls auf die Größe der Messunsicherheit auswirkt.

Die aktuelle Messunsicherheit wird erfindungsgemäß durch Fehlerfortpflanzung bestimmt. Eine derartige Fehlerbetrachtung ist immer dann vorzunehmen, wenn bei der Bestimmung der Messunsicherheit mehrere, voneinander unabhängige fehlerbehaftete Größen zu berücksichtigen sind.

Neben der Bestimmung der Einzelmesswerte mit einer Messfrequenz wird erfindungsgemäß die Messunsicherheit mit der gleichen Messfrequenz und damit in Echtzeit bestimmt. Dabei kann die Bestimmung der aktuellen Messunsicherheit im Wesentlichen gleichzeitig mit der Bestimmung des Einzelmesswertes des Durchflusses erfolgen. Alternativ kann die Bestimmung der aktuellen Messunsicherheit auch zeitlich nach der Bestimmung des Einzelmesswertes des Durchflusses, jedoch innerhalb derselben Periode der Messfrequenz erfolgen.

Im Rahmen der vorliegenden Erfindung wird unter einer statischen Fehlerquelle jede Fehlerquelle verstanden, die mit einem konstanten relativen oder absoluten Wert der Messunsicherheit während einer Messung berücksichtigt wird. Dagegen sind dynamische Fehlerquellen solche, die während einer Messung variieren und deren Wert der relativen oder absoluten Messunsicherheit ebenfalls variiert.

Das erfindungsgemäße Verfahren ermöglicht es dem Anwender durch die genaue Angabe einer auf einen Einzelmesswert bezogene aktuelle Messunsicherheit, die Zuverlässigkeit der Einzelmesswerte einer Messung zu beurteilen, wodurch insgesamt die Qualität der Messung verbessert wird.

Gemäß einer ersten Ausgestaltung des erfindungsgemäßen Verfahrens misst das Durchflussmessgerät den Volumendurchfluss oder den Massedurchfluss des Mediums. Beispielsweise kann das Durchflussmessgerät ein magnetischinduktives Durchflussmessgerät oder ein Ultraschalldurchflussmessgerät oder ein Coriolisdurchflussmessgerät oder ein Vortex-Durchflussmessgerät sein.

Erfindungsgemäß geht bzw. gehen als statische Fehlerquelle die Messunsicherheit der Kalibrierung und/oder die Messunsicherheit der Wiederholbarkeit und/oder die Messunsicherheit der Langzeitreproduzierbarkeit und/oder die Messunsicherheit der Linearität des Durchflussmessgeräts in die Bestimmung der aktuellen Messunsicherheit ein. Informationen zu der Höhe dieser Messunsicherheiten finden sich üblicherweise auf dem Kalibrierschein des Durchflussmessgeräts. Alternativ können die zuvor genannten Messunsicherheiten der Kalibrierung und/oder der Wiederholbarkeit und/oder der Langzeitreproduzierbarkeit und/oder der Linearität auch auf experimentellen Daten beruhen.

In der Regel werden Durchflussmessgeräte vor oder mit ihrer Inbetriebnahme mit einem Standardmedium unter Referenzbedingungen, d.h. bei einer vorgegebenen Referenztemperatur und einem Referenzdruck, kalibriert, wobei auch dieser Prozess einer Kalibrierunsicherheit unterliegt. Zum einen ist diese Messunsicherheit zurückzuführen auf den Fehler des Standardmediums und zum anderen auf die Unvollkommenheit des Kalibrationsprozesses.

Die Wiederholbarkeit von unmittelbar aufeinanderfolgenden Messungen sowie die Langzeitreproduzierbarkeit unter gleichen Messbedingungen sind ebenfalls einer Messunsicherheit aufgrund der Unvollkommenheit des zu vermessenden Mediums sowie der Unvollkommenheit des Messprozesses unterworfen.

Eine weitere Messunsicherheit resultiert aus der Bestimmung der Linearität des Durchflussmessgerätes.

Erfindungsgemäß geht als dynamische Fehlerquelle die Nullpunktstabilität des Durchflussmessgeräts und die Variation wenigstens eines Betriebsparameters, wie beispielsweise der Temperatur oder des Drucks, in die Bestimmung der aktuellen Messunsicherheit ein.

Definitionsgemäß ist die Nullpunktstabilität die Eigenschaft eines Messgeräts seinen Nullpunkt auch bei Änderung der äußeren Betriebsparameter insbesondere der Betriebstemperatur nicht zu verändern. Der Einfluss von Temperatur- und/oder Druckänderungen auf den Nullpunkt des Durchflussmessgeräts ist üblicherweise den Herstellerangaben zu entnehmen.

Neben einer Verschiebung des Nullpunktes können sich Änderungen der Betriebsparameter, wie insbesondere dem Druck und/oder der Temperatur ebenfalls auf das Medium selbst und/oder auf das Durchflussmessgerät auswirken. Vorzugsweise sind die Auswirkungen der Änderungen wenigstens eines Betriebsparameters auf den Messwert und/oder auf die Messunsicherheit als experimentelle Daten in der Fehlereinheit gespeichert. Zudem sind Änderungen der Betriebsparameter durch eine Korrektur der Parameter, die unter Referenzbedingungen bestimmt wurden, zu berücksichtigen.

Besonders bevorzugt werden alle zuvor genannten Fehlerquellen bei der Bestimmung der aktuellen Messunsicherheit eines Einzelmesswertes des Durchflusses berücksichtigt, womit eine zuverlässige Aussage darüber getroffen werden kann, innerhalb welcher Fehlergrenzen der wahre Messwert des Durchflusses liegt.

Im Folgenden wird beispielhaft die Bestimmung der aktuellen Messunsicherheit eines Einzelmesswerte betrachtet, wobei der Einzelmesswert des Durchflusses mit einem Coriolis-Durchflussmessgerät bestimmt wird.

Zur Durchflussmessung wird die von einem Medium durchflossene Leitung bzw. ein vom Medium durchflossenes Rohr von einem Aktuator in Schwingung versetzt. An der Einströmseite und an der Ausströmseite des Rohrs befinden sich jeweils Sensoren, die eine Phasendifferenz der Schwingungen zwischen den Sensoren detektieren, wobei die Phasendifferenz auf den Massenfluss zurückzuführen ist. Diese Phasendifferenz ist proportional zum Massedurchfluss.

Der Massendurchfluss durch die Leitung lässt sich demnach auf folgende Weise bestimmen:

$$\dot{m} = C \cdot K_R \cdot \left( t_d - \overline{t_0} \right)$$

Dabei ist

$K_R$ der Kalibrationsfaktor, welcher im Rahmen der Kalibrierung des Durchflussmessgeräts unter Referenzbedingungen bestimmt wird,
C der Korrekturfaktor, der den Fall berücksichtigt, dass der Betriebszustand von den Standardbedingungen der Kalibrierung abweicht,
$t_d$ der Zeitversatz der Schwingungen zwischen den Sensoren aufgrund des Durchflusses des Mediums und
$\overline{t_0}$ der Zeitversatz zwischen den Sensoren, wobei kein Medium durch die Leitung fließt (Offset).

Nach Umstellung der Gleichung erhält man

$$\dot{m} = C \cdot \left( \dot{m}_R - \dot{m}_0 \right),$$

wobei

$\dot{m}_R$ der Massenfluss ohne Berücksichtigung der Abweichung von den Referenzbedingungen ist und
$\dot{m}_0$ der Offset des Massendurchflusses ohne Durchfluss eines Mediums ist.

Die absolute Messunsicherheit des Massendurchflusses lässt sich nun gemäß der Fehlerfortpflanzung folgendermaßen berechnen:

$$u_{\dot{m}} = \sqrt{\left( \frac{\delta \dot{m}}{\delta \dot{m}_R} u_{\dot{m}_R} \right)^2 + \left( \frac{\delta \dot{m}}{\delta \dot{m}_0} u_{\dot{m}_0} \right)^2 + \left( \frac{\delta \dot{m}}{\delta C} u_C \right)^2}$$

Die relative Messunsicherheit des Massendurchflusses ergibt sich gemäß folgender Gleichung:

$$u_{\dot{m}_\%} = \frac{u_{\dot{m}}}{\dot{m}} = \sqrt{\left( \frac{u_{\dot{m}_R}}{\dot{m}_R - \dot{m}_0} \right)^2 + \left( \frac{u_{\dot{m}_0}}{\dot{m}_R - \dot{m}_0} \right)^2 + \left( \frac{u_C}{C} \right)^2}$$

Dabei ist $u_{\dot{m}_R}$ jeweils die Messunsicherheit eines Durchflussmessgeräts, das unter Referenzbedingungen betrieben wird. Diese Messunsicherheit berücksichtigt die Messunsicherheit der Kalibrierung und/oder der Wiederholbarkeit und/oder der Langzeitreproduzierbarkeit und/oder der Linearität des Durchflussmessgeräts.

Die Messunsicherheit $u_{\dot{m}_0}$ betrifft die Messunsicherheit des Nullpunktes des Messgeräts und insofern die Nullpunktstabilität, wenn der Betriebszustand von den Referenzbedingungen abweicht.

Die Messunsicherheit $u_C$ betrifft die Messunsicherheit aufgrund von Abweichungen des Betriebszustandes von Referenzbedingungen. Insbesondere dynamische Veränderungen des Betriebszustandes beispielsweise der Temperatur werden an dieser Stelle berücksichtigt.

Wie bereits dargelegt, weisen die Herstellerangaben häufig Informationen bezüglich des Einflusses der Temperatur auf die Nullpunktstabilität $k_{\dot{m}_0 T_f}$ sowie bezüglich des Einflusses des Drucks $k_{C_{pf}}$ auf den Kalibrierungsfaktor auf.

Beträgt die Mediumtemperatur $T_f$, so beträgt die zusätzliche Messunsicherheit $u_{\dot{m}_0 T_f}$ aufgrund der Abweichung der Temperatur von den Referenzbedingungen $T_{f R_0}$

$$u_{\dot{m}_0 T_f} = k \cdot k_{\dot{m}_0 T_f} \left( T_f - T_{f R_0} \right) \cdot q_n,$$

wobei k von der Annahme der statistischen Verteilung der Messwerte abhängig ist, beispielsweise ist bei einer Rechteckverteilung $k = 1/\sqrt{3}$ , und wobei $q_n$ der Messwert des Durchflusses ist. Weicht der Druck des Mediums $p_f$ vom Referenzdruck $p_{fR}$ ab, so beträgt die zusätzliche Messunsicherheit

$$u_{C\% p_f} = k \cdot k_{C p_f} \left( p_f - p_{fR} \right).$$

Zur Berechnung der Gesamtunsicherheit werden die zusätzlichen Messunsicherheiten dann im Rahmen der Fehlerfortpflanzung berücksichtigt. Die Gesamtunsicherheit kann entweder als absoluter oder relativer Wert ausgegeben werden.

Gemäß einer weiteren vorteilhaften Ausgestaltung des erfindungsgemäßen Verfahrens weist das Durchflussmessgerät eine Anzeigeeinheit auf, wobei jeder Einzelmesswert und die zugehörige aktuelle Messunsicherheit über die Anzeigeeinheit ausgegeben werden.

Gemäß einer weiteren Ausgestaltung liegt die Messfrequenz zwischen 20 und 500 Hz, vorzugsweise im Bereich von 100 Hz. Aufgrund der hohen Messfrequenz entspricht die Bestimmung des Durchflusses mit der aktuellen Messunsicherheit einer Echtzeitmessung.

Erfindungsgemäß weist das Durchflussmessgerät wenigstens eine zusätzliche Sensoreinheit zur Erfassung wenigstens eines aktuellen Betriebsparameters auf, wobei die Sensoreinheit die Messwerte des aktuellen Betriebsparameters zumindest an die Fehlereinheit weiterleitet. Relevante Betriebsparameter sind beispielsweise die Umgebungstemperatur und/oder der Druck. Eine solche externe Sensoreinheit kann beispielsweise einen PT-Widerstand umfassen. Alternativ kann eine entsprechende Sensoreinheit in der Fehlereinheit integriert sein.

Gemäß einer weiteren vorteilhaften Ausgestaltung weist das Durchflussmessgerät eine Schnittstelle auf, über die wenigstens ein aktueller Betriebsparameter, beispielsweise die Temperatur oder der Druck eingegeben wird und die den aktuellen Betriebsparameter an die Fehlereinheit weiterleitet.

Gemäß einer weiteren Ausgestaltung des erfindungsgemäßen Verfahrens wird eine maximale Messunsicherheit festgelegt, und die aktuelle Messunsicherheit wird mit der maximalen Messunsicherheit verglichen. Bei Überschreiten der maximalen Messunsicherheit wird eine Warnung ausgegeben. Beispielsweise kann die maximale Messunsicherheit vor Inbetriebnahme des Durchflussmessgeräts oder nach einer Wartung festgelegt werden. Vorzugsweise wird die Warnung ebenfalls an die Anzeigeeinheit weitergeleitet und von der Anzeigeeinheit ausgegeben. Das Überschreiten einer maximalen Messunsicherheit kann ein Hinweis auf eine Störung des Betriebszustandes sein.

Gemäß einer weiteren Ausgestaltung des Verfahrens weist das Durchflussmessgerät einen Zähler auf, wobei der Zähler den Gesamtdurchfluss eines zeitlich begrenzten Messvorgangs ausgibt. Dazu integriert der Zähler die Einzelmesswerte über die Zeit eines Messvorgangs. Zudem bestimmt der Zähler gemäß dieser Ausgestaltung vorzugsweise durch eine gewichtete Mittelwertbildung aus den aktuellen Messunsicherheiten eine Gesamtmessunsicherheit für den Messvorgang und gibt diese aus.

Gemäß einer zweiten Lehre der vorliegenden Erfindung wird die eingangs genannte Aufgabe durch ein eingangs genanntes Durchflussmessgerät dadurch gelöst, dass die Fehlereinheit derart ausgestaltet ist, dass sie zu jedem Einzelmesswert eine aktuelle Messunsicherheit bestimmt und dass die Fehlereinheit zur Bestimmung der aktuellen Messunsicherheit die Messunsicherheiten von statischen und dynamischen Fehlerquellen durch Fehlerfortpflanzung miteinander verknüpft und dass das Durchflussmessgerät wenigstens eine zusätzliche Sensoreinheit zur Erfassung wenigstens eines aktuellen Betriebparameters aufweist und dass die Sensoreinheit die Messwerte des aktuellen Betriebsparameters zumindest an die Fehlereinhei weiterleitet und dass als dynamische Fehlerquelle die Variation wenigstens eines Betriebsparameters und die Nullpunktstabilität des Durchflussmessgeräts in die Bestimmung der aktuellen Messunsicherheit eingeht und dass als statische Fehlerquelle die Messunsicherheit der Kalibrierung und/oder die Messunsicherheit der Widerholbarkeit und/oder die Messunsicherheit der Linearität des Durchflussmessgeräts in die Bestimmung der aktuellen Messunsicherheit eingeht bzw. eingehen.

Eine erste Ausgestaltung des Durchflussmessgeräts zeichnet sich dadurch aus, dass eine Anzeigeeinheit zur Ausgabe der Einzelmesswerte und der zugehörigen aktuellen Messunsicherheit vorhanden ist, und/oder eine Schnittstelle zur externen Ausgabe vorhanden ist.

Erfindungsgemäß ist wenigstens eine zusätzliche Sensoreinheit zur Erfassung von wenigstens einem aktuellen Betriebsparameter vorhanden und optional eine Schnittstelle zur Eingabe von wenigstens einem aktuellen Betriebsparameter.

Gemäß einer weiteren Ausgestaltung des erfindungsgemäßen Durchflussmessgeräts ist ein Zähler vorhanden, wobei der Zähler den Gesamtdurchfluss eines zeitlich begrenzten Messvorgangs ausgibt. Dazu ist der Zähler derart ausgestaltet, dass er die Einzelmesswerte des Durchflusses über den Zeitraum eines zeitlich begrenzten Messvorgangs integriert. Zudem ist der Zähler derart ausgestaltet, dass er unter Berücksichtigung der aktuellen Messunsicherheiten eine Gesamtmessunsicherheit für den Messvorgang ausgibt. Beispielsweise bestimmt der Zähler die Gesamtmessunsicherheit als gewichtetes Mittel der aktuellen Messunsicherheiten.

Erfindungsgemäß ist das Durchflussmessgerät derart ausgestaltet, dass es im Betriebszustand ein zuvor beschriebenes Verfahren ausführt.

Im Einzelnen gibt es nun eine Vielzahl von Möglichkeiten, das erfindungsgemäße Verfahren und das Durchflussmessgerät auszugestalten und weiterzubilden. Dazu wird verwiesen sowohl auf die den unabhängigen Patentansprüchen nachgeordneten Patentansprüche als auch auf die nachfolgende Beschreibung von bevorzugten Ausführungsbeispielen in Verbindung mit der Zeichnung. In der Zeichnung zeigen

Fig. 1    ein Ausführungsbeispiel eines erfindungsgemäßen Verfahrens und

Fig. 2    ein Ausführungsbeispiel eines erfindungsgemäßen Durchflussmessgeräts.

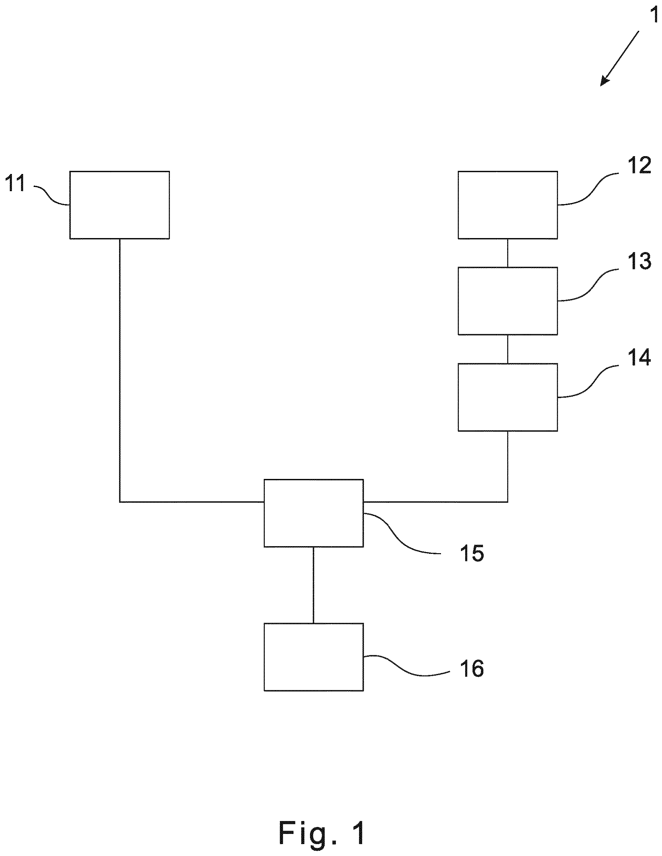

In Fig. 1 ist dargestellt ein Ausführungsbeispiel eines erfindungsgemäßen Verfahrens 1 zum Betreiben eines Durchflussmessgeräts 2 zur Messung des Durchflusses eines strömenden Mediums durch eine Leitung 3, wobei das Durchflussmessgerät 2 eine Messeinheit 4 zur Bestimmung von Einzelmesswerten 6 des Durchflusses und eine Fehlereinheit 5 zur Bestimmung der aktuellen Messunsicherheit 7 der Einzelmesswerte 6 aufweist und wobei die Bestimmung der Einzelmesswerte 6 mit einer Messfrequenz von 100 Hz erfolgt. Zudem weist das Durchflussmessgerät 2 eine Anzeigeeinheit 8 zur Anzeige der Einzelmesswerte 6 und den zugehörigen aktuellen Messunsicherheiten 7 und eine Sensoreinheit 9 zur Erfassung der Betriebsparameter Temperatur und Druck auf. Schließlich weist das Durchflussmessgerät 2 auch einen Zähler 10 auf, der die Einzelmesswerte 6 über einen begrenzten Zeitraum, also während eines zeitlich begrenzten Messvorgangs, integriert und so den Gesamtdurchfluss eines zeitlich begrenzten Messvorgangs ausgibt, und wobei der Zähler durch eine gewichtete Mittelwertbildung der aktuellen Messunsicherheiten 7 eine Gesamtmessunsicherheit für den Gesamtdurchfluss ausgibt.

In einem ersten Schritt 11 erfolgt die Bestimmung des Durchflusses durch die Messeinheit 4. Gleichzeitig werden von der Sensoreinheit 9 die relevanten Betriebsparameter gemessen und die Messwerte der Betriebsparameter werden an die Fehlereinheit 5 weitergeleitet 12. In einem nächsten Schritt 13 bestimmt die Fehlereinheit 5 eine aktuelle Messunsicherheit 7 zu dem Einzelmesswert 6 des Durchflusses. Dazu sind in der Fehlereinheit 5 die Messunsicherheiten, die sich aufgrund der Kalibrierung, der Wiederholbarkeit, der Langzeitreproduzierbarkeit und der Linearität ergeben, gespeichert. Diese Messunsicherheiten werden durch Fehlerfortpflanzung mit den Messunsicherheiten, die sich aus der Variation von Temperatur und Druck ergeben, verknüpft. Dazu wird der Einzelmesswert 6 des Durchflusses an die Fehlereinheit 5 übergeben. Die so bestimmte aktuelle Messunsicherheit 7 wird dann mit einer vor der Inbetriebnahme des Durchflussmessgeräts festgelegten maximalen Messunsicherheit verglichen 14. Sofern die aktuelle Messunsicherheit 7 die maximale Messunsicherheit überschreitet, wird eine Warnung ausgegeben.

Sowohl der Einzelmesswert 6 des Durchflusses als auch die zugehörige aktuelle Messunsicherheit 7 und auch eine Warnung im Fall des Überschreitens der maximalen Messunsicherheit werden an die Anzeigeeinheit 8 weitergeleitet und von dieser ausgegeben 15. Dem Anwender ist es auf diese Weise möglich, die Zuverlässigkeit der ausgegebenen Einzelmesswerte 6 individuell zu beurteilen, wodurch die Qualität der Messung erheblich verbessert wird.

Weiterhin werden sowohl der Einzelmesswert 6 als auch die aktuelle Messunsicherheit 7 an den Zähler 10 übergeben 16, der diese Werte in oben beschriebener Weise zur Bestimmung eines Gesamtdurchflusses und einer Gesamtmessunsicherheit berücksichtigt.

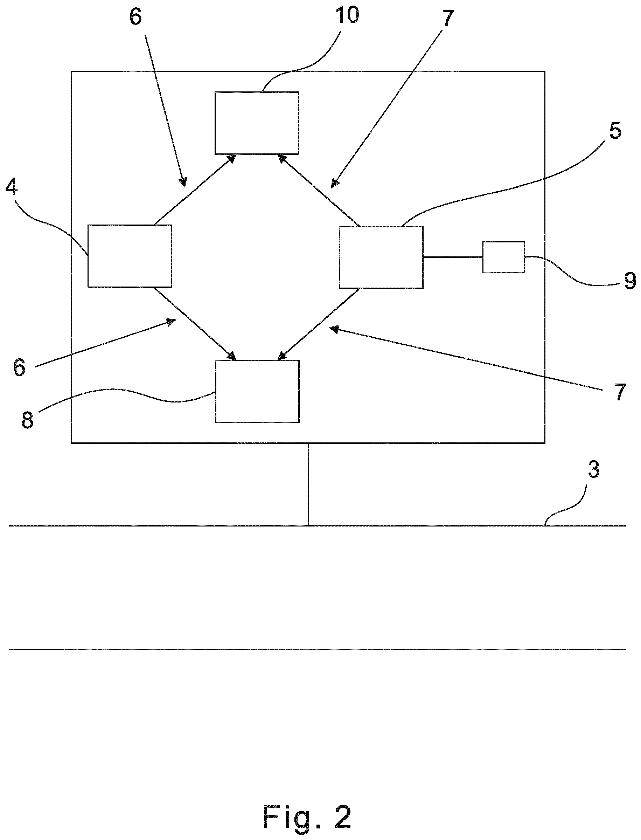

In Fig. 2 ist schematisch dargestellt ein Durchflussmessgerät 2 zur Messung des Durchflusses eines strömenden Mediums durch eine Leitung 3, mit einer Messeinheit 4 zur Bestimmung von Einzelmesswerten 6 des Durchflusses und mit einer Fehlereinheit 5 zur Bestimmung der Messunsicherheit der Einzelmesswerte, wobei die Bestimmung der Einzelmesswerte 6 mit einer Messfrequenz von 100 Hz erfolgt. Dabei ist die Fehlereinheit 5 derart ausgestaltet ist, dass sie zu jedem Einzelmesswert 6 eine aktuelle Messunsicherheit 7 bestimmt. Zudem berücksichtigt die Fehlereinheit 5 zur Bestimmung der aktuellen Messunsicherheit 7 sowohl statische als auch dynamische Fehlerquellen durch Fehlerfortpflanzung.

Zudem weist das Durchflussmessgerät eine Anzeigeeinheit 8 auf, an die sowohl der Einzelmesswert 6 als auch die zugehörige aktuelle Messunsicherheit 7 übergeben werden, wobei die Anzeigeeinheit 8 derart ausgestaltet ist, dass sie die Einzelmesswerte 6 und die zugehörigen aktuellen Messunsicherheiten 7 ausgibt.

Das dargestellte Durchflussmessgerät 2 erlaubt es aufgrund der verbesserten Angabe der Messunsicherheit der Einzelmessungen 6 die Zuverlässigkeit der Einzelmessungen 6 zu beurteilen, wodurch die Qualität der Messung insgesamt verbessert wird.

**Bezugszeichen**

1    Verfahren zum Betreiben eines Durchflussmessgeräts
2    Durchflussmessgerät
3    Leitung
4    Messeinheit
5    Fehlereinheit
6    Einzelmesswert
7    aktuelle Messunsicherheit
8    Anzeigeeinheit
9    Sensoreinheit
10   Zähler
11   Bestimmung eines Einzelmesswertes des Durchflusses
12   Messung und Weiterleitung aktueller Betriebsparameter durch Sensoreinheit
13   Bestimmung der aktuellen Messunsicherheit
14   Vergleich mit maximaler Messunsicherheit
15   Ausgabe des Einzelmesswerts und der aktuellen Messunsicherheit durch die Anzeigeeinheit
16   Übergabe des Einzelmesswerts und der aktuellen Messunsicherheit an den Zähler


**Patentansprüche**

1. Verfahren (1) zum Betreiben eines Durchflussmessgeräts (2) zur Messung des Durchflusses eines strömenden Mediums durch eine Leitung (3), wobei das Durchflussmessgerät (2) eine Messeinheit (4) zur Bestimmung von Einzelmesswerten (6) des Durchflusses und eine Fehlereinheit (5) zur Bestimmung der Messunsicherheit der Einzelmesswerte (6) aufweist, wobei die Bestimmung der Einzelmesswerte (6) mit einer Messfrequenz erfolgt, wobei zu jedem Einzelmesswert (6) von der Fehlereinheit (5) eine aktuelle Messunsicherheit (7) bestimmt wird, wobei zur Bestimmung der aktuellen Messunsicherheit (7) die Messunsicherheiten von statischen und dynamischen Fehlerquellen durch Fehlerfortpflanzung miteinander verknüpft werden, und wobei das Durchflussmessgerät (2) wenigstens eine zusätzliche Sensoreinheit (9) zur Erfassung wenigstens eines aktuellen Betriebsparameters aufweist, **dadurch gekennzeichnet, dass** die Sensoreinheit (9) die Messwerte des aktuellen Betriebsparameters zumindest an die Fehlereinheit (5) weiterleitet, dass als dynamische Fehlerquelle die Variation wenigstens eines Betriebsparameters und die Nullpunktstabilität des Durchflussmessgeräts (2) in die Bestimmung der aktuellen Messunsicherheit eingeht, und dass als statische Fehlerquelle die Messunsicherheit der Kalibrierung und/oder die Messunsicherheit der Wiederholbarkeit und/oder die Messunsicherheit der Langzeitreproduzierbarkeit und/oder die Messunsicherheit der Linearität des Durchflussmessgeräts in die Bestimmung der aktuellen Messunsicherheit eingeht bzw. eingehen.

2. Verfahren (1) nach Anspruch 1, **dadurch gekennzeichnet, dass** das Durchflussmessgerät (2) den Volumendurchfluss oder den Massendurchfluss des Mediums misst.

3. Verfahren (1) nach einem der Ansprüche 1 bis 2, **dadurch gekennzeichnet, dass** das Durchflussmessgerät (2) eine Anzeigeeinheit (8) aufweist, und dass jeder Einzelmesswert (6) und die zugehörige aktuelle Messunsicherheit (7) über die Anzeigeeinheit (8) ausgegeben werden.

4. Verfahren (1) nach einem der Ansprüche 1 bis 3, **dadurch gekennzeichnet, dass** die Messfrequenz zwischen 20 und 500 Hz, vorzugsweise im Bereich von 100 Hz, liegt.

5. Verfahren (1) nach einem der Ansprüche 1 bis 4, **dadurch gekennzeichnet, dass** das Durchflussmessgerät (2) eine Schnittstelle aufweist, über die wenigstens ein Wert eines Betriebsparameters eingegeben wird und dass die Schnittstelle den Wert des Betriebsparameters zumindest an die Fehlereinheit (5) weiterleitet.

6. Verfahren (1) nach einem der Ansprüche 1 bis 5, **dadurch gekennzeichnet, dass** eine maximale Messunsicherheit festgelegt wird, dass die aktuelle Messunsicherheit (7) mit der maximalen Messunsicherheit verglichen wird und dass bei Überschreiten der maximalen Messunsicherheit eine Warnung ausgegeben wird.

7. Verfahren (1) nach einem der Ansprüche 1 bis 6, **dadurch gekennzeichnet, dass** das Durchflussmessgerät (2) einen Zähler (10) aufweist, wobei der Zähler (10) den Gesamtdurchfluss eines zeitlich begrenzten Messvorgangs ausgibt und wobei der Zähler (10) unter Berücksichtigung der aktuellen Messunsicherheiten, vorzugsweise durch eine gewichtete Mittelwertbildung eine Gesamtmessunsicherheit für den Messvorgang ausgibt.

8. Durchflussmessgerät (2) zur Messung des Durchflusses eines strömenden Mediums durch eine Leitung (3), mit einer Messeinheit (4) zur Bestimmung von Einzelmesswerten (6) des Durchflusses und mit einer Fehlereinheit (5) zur Bestimmung der Messunsicherheit der Einzelmesswerte (6), wobei die Bestimmung der Einzelmesswerte (6) mit einer Messfrequenz erfolgt, wobei die Fehlereinheit (5) derart ausgestaltet ist, dass sie zu jedem Einzelmesswert (6) eine aktuelle Messunsicherheit (7) bestimmt,
   wobei die Fehlereinheit (5) zur Bestimmung der aktuellen Messunsicherheit (7) die Messunsicherheiten von statischen und dynamischen Fehlerquellen durch Fehlerfortpflanzung miteinander verknüpft werden, und wobei das Durchflussmessgerät (2) wenigstens eine zusätzliche Sensoreinheit (9) zur Erfassung wenigstens eines aktuellen Betriebsparameters aufweist, **dadurch gekennzeichnet, dass** die Sensoreinheit (9) die Messwerte des aktuellen Betriebsparameters zumindest an die Fehlereinheit (5) weiterleitet, dass als dynamische Fehlerquelle die Variation wenigstens eines Betriebsparameters und die Nullpunktstabilität des Durchflussmessgeräts (2) in die Bestimmung der aktuellen Messunsicherheit eingeht, dass als statische Fehlerquelle die Messunsicherheit der Kalibrierung und/oder die Messunsicherheit der Wiederholbarkeit und/oder die Messunsicherheit der Langzeitreproduzierbarkeit und/oder die Messunsicherheit der Linearität des Durchflussmessgeräts in die Bestimmung der aktuellen Messunsicherheit eingeht bzw. eingehen, und dass das Durchflussmessgerät (2) derart ausgestaltet ist, dass es im Betriebszustand das Verfahren nach einem der Ansprüche 1 bis 7 ausführt.

9. Durchflussmessgerät (2) nach Anspruch 8, **dadurch gekennzeichnet, dass** eine Anzeigeeinheit (8) zur Ausgabe der Einzelmesswerte (6) und der zugehörigen aktuellen Messunsicherheit (7) vorhanden ist und/oder eine Schnittstelle zur externen Ausgabe vorhanden ist.

10. Durchflussmessgerät (2) nach einem der Ansprüche 8 oder 9, **dadurch gekennzeichnet, dass** eine Schnittstelle zur Eingabe von wenigstens einem aktuellen Betriebsparameter vorhanden ist bzw. sind.

11. Durchflussmessgerät (2) nach einem der Ansprüche 8 bis 10, **dadurch gekennzeichnet, dass** ein Zähler (10) vorhanden ist, wobei der Zähler (10) den Gesamtdurchfluss eines zeitlich begrenzten Messvorgangs ausgibt und wobei der Zähler (10) unter Berücksichtigung der aktuellen Messunsicherheiten (7) eine Gesamtmessunsicherheit für den Messvorgang ausgibt.

## Claims

1. Method (1) for operating a flowmeter (2) for measuring the flow of a flowing medium through a pipe (3), wherein the flowmeter (2) has a measuring unit (4) for determining individual measured values (6) of the flow and an error unit (5) for determining the measurement uncertainty of the individual measured values (6), wherein the determination of the individual measured values (6) is carried out using a measuring frequency,

   wherein a present measurement uncertainty (7) is determined for each individual measured value (6) by the error unit (5),
   wherein the measurement uncertainties from static and dynamic error sources are linked to one another by error propagation for determining the present measurement uncertainty (7), and
   wherein the flowmeter (2) has at least one additional sensor unit (9) for detecting at least one present operating parameter
   **characterized in**
   **that** the sensor unit (9) forwards the measured values of the present operating parameter at least to the error unit (5),
   **that** the variation of at least one operating parameter and the zero point stability of the flowmeter (2) are used as dynamic error source in determining the present measurement uncertainty, and
   **that** the measurement uncertainty of calibration and/or the measurement uncertainty of reproducibility and/or the measurement uncertainty of long-term reproducibility and/or the measurement uncertainty of linearity of the flowmeter is/are used as static error source in determining the present measurement uncertainty (7).

2. Method (1) according to claim 1, **characterized in that** the flowmeter (2) measures the volume flow or the mass flow of the medium.

3. Method (1) according to claim 1 or 2, **characterized in that** the flowmeter (2) has a display unit (8), and that each individual measured value (6) and the associated present measurement uncertainty (7) are displayed via the display unit (8).

4. Method (1) according to any one of claims 1 to 3, **characterized in that** the measuring frequency lies between 20 and 500 Hz, preferably near 100 Hz.

5. Method (1) according to any one of claims 1 to 4, **characterized in that** the flowmeter (2) has an interface, via which at least one value of an operating parameter is input and that the interface forwards the value of the operating parameter at least to the error unit (5).

6. Method (1) according to any one of claims 1 to 5, **characterized in that** a maximum measurement uncertainty is set, that the present measurement uncertainty (7) is compared to the maximum measurement uncertainty and that a warning is issued when the maximum measurement uncertainty has been exceeded.

7. Method (1) according to any one of claims 1 to 6, **characterized in that** the flowmeter (2) has a counter (10), wherein the counter (10) outputs the total flow of a temporally limited measurement operation and wherein the counter (10) outputs a total measurement uncertainty taking into account the present measurement uncertainty, preferably by means of a weighted average determination.

8. Flowmeter (2) for measuring the flow of a flowing medium through a pipe (3), having a measuring unit (4) for determining individual measured values (6) of the flow and having an error unit (5) for determining the measurement uncertainty of the individual measured values (6), wherein the determination of the individual measured values (6) is carried out using a measuring frequency, wherein the error unit (5) is designed such that it determines a present measurement uncertainty (7) for each individual measured value (6),

wherein the error unit (5) links the measurement uncertainties from static and dynamic error sources to one another by error propagation for determining the present measurement uncertainty (7), and
wherein the flowmeter has at least one additional sensor unit (9) for detecting at least one present operating parameter,
**characterized in**
**that** the sensor unit (9) forwards the measured values of the present operating parameter at least to the error unit (5),
**that** the variation of at least one operating parameter and the zero point stability of the flowmeter (2) are used as dynamic error source in determining the present measurement uncertainty,
**that** the measurement uncertainty of calibration and/or the measurement uncertainty of reproducibility and/or the measurement uncertainty of long-term reproducibility and/or the measurement uncertainty of linearity of the flowmeter is/are used as static error source in determining the present measurement uncertainty (7), and
**that** the flowmeter is designed such that it carries out the method according to any one of claims 1 to 7 during operation.

9. Flowmeter (2) according to claim 8, **characterized in that** the flowmeter has a display unit (8) for displaying the individual measured values (6) and the associated, present measurement uncertainties (7) and/or an interface for external output.

10. Flowmeter (2) according to claim 8 or 9, **characterized in that** an interface for input of at least one present operating parameter is provided.

11. Flowmeter (2) according to any one of claims 8 to 10, **characterized in that** the flowmeter has a counter (10), wherein the counter (10) outputs the total flow of a temporally limited measurement operation and wherein the counter (10) outputs a total measurement uncertainty for the measurement operation taking into account the present measurement uncertainties (7).

**Revendications**

1. Procédé (1) d'exploitation d'un débitmètre (2) permettant de mesurer le débit d'un fluide en mouvement à travers une conduite (3), le débitmètre (2) présentant une unité de mesure (4) permettant de déterminer des valeurs de mesure individuelles (6) du débit et une unité d'erreur (5) permettant de déterminer l'incertitude de mesure des valeurs de mesure individuelles (6), la détermination des valeurs de mesure individuelles (6) étant effectuée à une fréquence de mesure, une incertitude de mesure (7) actuelle étant déterminée par l'unité d'erreur (5) pour chaque valeur de mesure individuelle (6), dans lequel, pour déterminer l'incertitude de mesure (7) actuelle, les incertitudes de mesure de sources d'erreur statiques et dynamiques sont associées les unes avec les autres par propagation des erreurs, et le débitmètre (2) présentant au moins une unité de capteur supplémentaire (9) permettant de détecter au moins un paramètre de fonctionnement actuel,

> **caractérisé en ce que** l'unité de capteur (9) retransmet les valeurs de mesure du paramètre de fonctionnement actuel au moins à l'unité d'erreur (5),
> **en ce que** comme source d'erreur dynamique, la variation d'au moins un paramètre de fonctionnement et la stabilité du zéro du débitmètre (2) entrent dans la détermination de l'incertitude de mesure actuelle, et
> **en ce que** comme source d'erreur statique, l'incertitude de mesure de l'étalonnage et/ou l'incertitude de mesure de la répétabilité et/ou l'incertitude de mesure de la reproductibilité à long terme et/ou l'incertitude de mesure de la linéarité du débitmètre entrent dans la détermination de l'incertitude de mesure actuelle.

2. Procédé (1) selon la revendication 1, **caractérisé en ce que** le débitmètre (2) mesure le débit volumique ou le débit massique du fluide.

3. Procédé (1) selon l'une quelconque des revendications 1 à 2, **caractérisé en ce que** le débitmètre (2) présente une unité d'affichage (8), et **en ce que** chaque valeur de mesure individuelle (6) et l'incertitude de mesure (7) actuelle associée sont sorties par l'unité d'affichage (8).

4. Procédé (1) selon l'une quelconque des revendications 1 à 3, **caractérisé en ce que** la fréquence de mesure est comprise entre 20 et 500 Hz, de préférence égale à environ 100 Hz.

5. Procédé (1) selon l'une quelconque des revendications 1 à 4, **caractérisé en ce que** le débitmètre (2) présente une interface par laquelle au moins une valeur d'un paramètre de fonctionnement est entrée, et **en ce que** l'interface retransmet la valeur du paramètre de fonctionnement au moins à l'unité d'erreur (5).

6. Procédé (1) selon l'une quelconque des revendications 1 à 5, **caractérisé en ce qu'**une incertitude de mesure maximale est définie, **en ce que** l'incertitude de mesure (7) actuelle est comparée à l'incertitude de mesure maximale, et **en ce qu'**un avertissement est émis en cas de dépassement de l'incertitude de mesure maximale.

7. Procédé (1) selon l'une quelconque des revendications 1 à 6, **caractérisé en ce que** le débitmètre (2) présente un compteur (10), le compteur (10) sortant le débit total d'un processus de mesure limité dans le temps, et le compteur (10) sortant une incertitude de mesure globale pour le processus de mesure en tenant compte des incertitudes de mesure actuelles de préférence par un calcul de moyenne pondéré.

8. Débitmètre (2) permettant de mesurer le débit d'un fluide en mouvement à travers une conduite (3), comprenant une unité de mesure (4) permettant de déterminer des valeurs de mesure individuelles (6) du débit et une unité d'erreur (5) permettant de déterminer l'incertitude de mesure des valeurs de mesure individuelles (6), la détermination des valeurs de mesure individuelles (6) étant effectuée à une fréquence de mesure, l'unité d'erreur (5) étant configurée de telle sorte qu'une incertitude de mesure (7) actuelle est déterminée pour chaque valeur de mesure individuelle (6), l'unité d'erreur (5) permettant de déterminer l'incertitude de mesure (7) actuelle associant les incertitudes de mesure de sources d'erreur statiques et dynamiques par propagation des erreurs, et le débitmètre (2) présentant au moins une unité de capteur (9) supplémentaire permettant de détecter au moins un paramètre de fonctionnement actuel,

> **caractérisé en ce que** l'unité de capteur (9) retransmet les valeurs de mesure du paramètre de fonctionnement actuel au moins à l'unité d'erreur (5),
> **en ce que** comme source d'erreur dynamique, la variation d'au moins un paramètre de fonctionnement et la stabilité du zéro du débitmètre (2) entrent dans la détermination de l'incertitude de mesure actuelle,
> **en ce que** comme source d'erreur statique, l'incertitude de mesure de l'étalonnage et/ou l'incertitude de mesure de la répétabilité et/ou l'incertitude de mesure de la reproductibilité à long terme et/ou l'incertitude de mesure de la linéarité du débitmètre entrent dans la détermination de l'incertitude de mesure actuelle, et
> **en ce que** le débitmètre (2) est configuré de telle sorte qu'en état de fonctionnement, il exécute le procédé selon l'une quelconque des revendications 1 à 7.

9. Débitmètre (2) selon la revendication 8, **caractérisé en ce qu'**une unité d'affichage (8) permettant de sortir les valeurs de mesure individuelles (6) et l'incertitude de mesure (7) actuelle associée est présente et/ou une interface pour la sortie externe est présente.

**10.** Débitmètre (2) selon l'une quelconque des revendications 8 et 9, **caractérisé en ce qu'**une interface pour entrer au moins un paramètre de fonctionnement actuel est présente.

**11.** Débitmètre (2) selon l'une quelconque des revendications 8 à 10, **caractérisé en ce qu'**un compteur (10) est présent, le compteur (10) sortant le débit total d'un processus de mesure limité dans le temps, et le compteur (10) sortant une incertitude de mesure totale pour le processus de mesure en tenant compte des incertitudes de mesure actuelles (7).

Fig. 1

Fig. 2

**IN DER BESCHREIBUNG AUFGEFÜHRTE DOKUMENTE**

**In der Beschreibung aufgeführte Patentdokumente**

- US 4864512 A

**In der Beschreibung aufgeführte Nicht-Patentliteratur**

- *Sensor Review,* 2001, vol. 21 (1), 16-22